# EUROPEAN PATENT APPLICATION

(11) **EP 3 511 440 A1**
(43) Date of publication of application: **17.07.2019**
(21) Application number: 18151413.4
(22) Date of filing: 12.01.2018
(51) Int. Cl.: C23F 1/02, B44C 1/22

(54) **PROCESS FOR MAKING ETCHED PATTERNS**

(71) Applicant: Omya International AG, 4665 Oftringen (CH)
(72) Inventor: BOLLSTRÖM, Roger, 4800 Zofingen (CH); HUNZIKER, Philipp, Loveland, OH, 45140 (US); FTOUNI, Jamal, 4800 Zofingen (CH); IWANOWSKA, Monika, 8006 Zürich (CH)
(74) Representative: Maiwald Patent- und Rechtsanwaltsgesellschaft mbH

(57) **Abstract**

The present invention relates to a process for making an etched pattern comprising a step of depositing onto a printable metal surface droplets of an ink composition provided by a printing method, wherein the ink composition comprises a first ink vehicle being water, a second ink vehicle being an organic compound and an etchant being an acid or a base according to the Bronsted definition, characterized in that the ink composition has a pH in the range of from 0 to 4 or from 9 to 14. The invention further relates to substrates having a metal surface with an etched pattern, to the use of such substrates in various applications, to articles comprising the inventive substrate and to the use of the inventive process for the production of metal products.

## Description

The present invention relates to a process for making an etched pattern comprising a step of depositing onto a printable metal surface droplets of an ink composition provided by a printing method, wherein the ink composition comprises a first ink vehicle being water, a second ink vehicle being an organic compound and an etchant being an acid or a base according to the Brønsted definition, characterized in that the ink composition has a pH in the range of from 0 to 4 or from 9 to 14. The invention further relates to substrates having a metal surface with an etched pattern, to the use of such substrates in various applications, to articles comprising the inventive substrate and to the use of the inventive process for the production of metal products.

Haptic or tactile patterns or characters on solid substrates are widely used and found in a variety of applications. Non-limiting examples include all kinds of printed media, packaging materials, data storages, security documents, decorative materials containers, sporting goods, toys, electronics such as mobile electronic devices, tools and machines, vehicle parts such as car parts, stickers, labels and tags including brand authentication tags, braille documents and other tactile documents.

In the art, there exist several methods to create patterns on various kinds of substrates depending on the material of the substrate and the desired application.

For example, EP 3 173 522 A1 discloses a method of tagging a substrate with a spectroscopically detectable security feature or pattern, wherein a liquid treatment composition comprising at least one acid is deposited onto a substrate, which comprises at least one external surface comprising a salifiable alkaline or alkaline earth compound that is allowed to react with the acid. The pattern is detectable by UV light, but has no or only a hardly haptic or tactile structure.

EP 3 173 247 A1 relates to a method of manufacturing a substrate with an embedded UV-visible pattern comprising the steps of (a) providing an uncoated substrate comprising at least one optical brightener, (b) providing a liquid treatment composition comprising at least one acid, and (c) applying the liquid treatment composition onto at least one region of the substrate in form of a preselected pattern to form an embedded UV-visible pattern. Again, the created pattern has no or only a hardly haptic or tactile structure.

European patent application no. 16 188 664.3 relates to a method of manufacturing a water-insoluble pattern on and/or within a substrate comprising the steps of (a) providing a substrate, (b) providing a first treatment composition comprising a deliquescent salt, (c) providing a second treatment composition comprising an acid or a salt thereof, and (d) depositing the treatment compositions onto at least one surface region of the substrate to form at least one water-insoluble pattern on and/or within a substrate. The method can be used to make haptic or tactile structures, such as tactile pictures, tactile diagrams, tactile maps, or tactile graphs, or it can be used to create a braille marking.

European patent application no. 16 188 656.9 relates to a method for creating a pattern on a natural material of human or animal origin which comprises the steps of (a) providing a natural material of human or animal origin, wherein the natural material comprises at least one external surface comprising calcium carbonate, (b) providing a liquid treatment composition, and (c) applying the liquid treatment composition onto the at least one external surface of the natural material to form a pattern. The material obtainable by this method has a solid tactile or haptic structure and thus can be used in tactile applications, braille applications, labelling applications, security applications, in overt security elements, in covert security elements, in decorative applications, in artistic applications, in visual applications, in packaging applications and the like. However, one requirement is that the substrate has an external surface comprising calcium carbonate.

It would also be desirable to create such haptic or tactile structures which are embedded in substrates having a metal surface.

In this regard, US 2006/0213870 A1 discloses a process for producing etched structures on layered substrates which can have a metal surface layer. Said process comprises the steps of providing a substrate having a surface layer thereon with a surface-side, jetting droplets of a deposit composition comprising an etchant onto the surface-side of said surface layer in an image-wise manner, and allowing the etchant to react with the surface layer. However, the disclosed process aims at modifying physical surface properties, for example the conductivity of a metal surface layer, wherein the surface layer in the area printed with the deposit composition is reacted or removed completely.

While the process may result in a haptic or tactile structure, the complete reaction or removal of the surface layer is not desirable in all cases and can lead, for example, to a destabilization of the surface layer or an unwanted destruction of other physical properties. Accordingly, there exists a general need for making patterns having a limited or reduced etching depth, in particular in connection with metal substrates.

In this respect, one object of the present invention can be seen in the provision of a process for making etched patterns, wherein the etching process does not or not substantially affect the overall performance of the etching substrate, e.g. in terms of conductivity and/or stability.

One particular aim of the present invention can be seen in the provision of a process for making such etched patterns on thin metal substrates, e.g. on metal foils.

Another object can be seen in the provision of a process for making patterns or substrates having a metal surface comprising such patterns, wherein the pattern has a haptic or tactile structure.

Still another object can be seen in the provision of a pattern with improved stability or resistance towards manipulations, tampering or removal.

Still another object of the present invention can be seen in the provision of a process for making a pattern which combines improved resistance towards manipulations, tampering or removal and fast production time.

One or more of the foregoing problems and other problems can be solved by the subject-matter as defined herein in the independent claims.

A first aspect of the present invention relates to a process for making an etched pattern, the process comprising the following steps:
(a) providing a substrate having a printable metal surface;
(b) providing an ink composition comprising
   (i) a first ink vehicle being water;
   (ii) a second ink vehicle being an organic compound; and
   (iii) an etchant being an acid or a base according to the Brønsted definition;
(c) depositing onto the printable metal surface of the substrate provided in step (a) droplets of the ink composition provided in step (b) by a printing method; and
(d) allowing the deposited ink composition to react with the printable metal surface to obtain a metal surface comprising an etched pattern;
characterized in that the ink composition has a pH in the range of from 0 to 4 or from 9 to 14, wherein in step (c) the ink composition is deposited onto the printable metal surface in the form of a pattern, and wherein in step (d) the metal is reacted only partially so that the substrate comprises unreacted metal in vertical direction to the printable metal surface directly below the etched pattern.

The inventors have found, surprisingly, that depositing on a metal surface an ink composition having a pH in the range of from 0 to 4 or from 9 to 14 and comprising an etchant being an acid or a base according to the Brønsted definition allows for making substrates having a metal surface comprising an etched pattern with a limited or reduced etching depth so that the etching process does not or not substantially affect the overall performance of the etched substrate.

Another aspect of the present invention relates to a substrate having a metal surface comprising an etched pattern obtainable by the inventive process.

Still another aspect of the present invention relates to the use of the substrate obtainable by the inventive process in tactile applications, in braille applications, in printing applications, in analytical applications, in diagnostic applications, in bioassays, in chemical applications, in electrical applications, in security devices, in overt or covert security elements, in brand protection, in micro lettering, in micro imaging, in decorative, artistic, or visual applications, or in packaging applications.

Still another aspect of the present invention relates to an article comprising the substrate obtainable by the inventive process, preferably the article is a print medium, a packaging, a data storage, a security document, a non-secure document, a decorative substrate, a drug, a tobacco product, a bottle, a garment, a container, a sporting good, a toy, a game, a mobile phone, a compact disc, a digital video disc, a blue ray disk, a machine, a tool, a vehicle part such as a car part, a sticker, a label, a tag, a poster, a passport, a driving licence, a bank card, a credit card, a bond, a ticket, a postage stamp, a tax stamp, a banknote, a certificate, a brand authentication tag, a business card, a greeting card, a braille document, a tactile document, or a wall paper.

Finally, another aspect of the present invention relates to the use of the inventive process for the production of metal foils, metal bottles, metal cans, metal containers, metal packaging materials, metal device covers such as metal mobile phone covers, metal toys, metal tools, metal decorative articles, metal art, metal vehicle parts, metal construction parts, metal labels or metal stickers.

The following terms used in this document shall have the meanings as set forth hereinafter.

The "pattern" referred to herein may have any conceivable shape or design, such as a bar code, a two-dimensional bar code, a QR code, a security mark, a label, a number, a letter, an alphanumeric symbol, a logo, an image, a braille marking or any combination thereof.

The terms "etching" and "etched" as used herein refers to an erosive chemical process, wherein substrate material is removed in the form of depressions starting from the surface of a substrate by the use of corrosive substances. Accordingly, the term "etchant" refers to a substance that is capable of undergoing an etching reaction with a specified substrate.

A "printable surface", e.g. a printable metal surface, in the meaning of the present invention is any surface that is suitable, without prior modification, for the deposition or application of ink compositions.

In the following, the term "drop spacing" shall be defined as the distance between the centres of two directly adjacent drops.

As used herein, the term "ink composition" refers to any liquid composition that can be deposited on or applied to a printable surface, e.g. a printable metal surface, by a printing method, preferably by means of inkjet printing. The "ink vehicle" acts as a liquid carrier and is usually removed after the printing process, e.g. by drying or evaporation.

Where an indefinite or definite article is used when referring to a singular noun, e.g. "a", "an" or "the", this includes a plural of that noun unless anything else is specifically stated.

Where the term "comprising" is used in the present description and claims, it does not exclude other elements. For the purposes of the present invention, the term "consisting of" is considered to be a preferred embodiment of the term "comprising". If hereinafter a group is defined to comprise at least a certain number of embodiments, this is also to be understood to disclose a group, which preferably consists only of these embodiments.

Terms like "obtainable" or "definable" and "obtained" or "defined" are used interchangeably. This, for example, means that, unless the context clearly dictates otherwise, the term "obtained" does not mean to indicate that, for example, an embodiment must be obtained by, for example, the sequence of steps following the term "obtained" though such a limited understanding is always included by the terms "obtained" or "defined" as a preferred embodiment.

Whenever the terms "including" or "having" are used, these terms are meant to be equivalent to "comprising" as defined hereinabove.

In the following, details and preferred embodiments of the inventive etching process will be disclosed. It is to be understood that these details and embodiments also apply to the substrate having a metal surface comprising the etched pattern obtainable by the inventive process, to the different uses of said substrate, to any article comprising said substrate and to the use of the inventive process for the production of specific articles.

In a first embodiment according to the present invention, the metal of the printable metal surface is selected from Al, Ag, Cr, Cu, Fe, Ni, Sn, Ti, V, Zn and alloys of these metals, preferably the metal is Al or Cu.

In another embodiment, the organic compound is an organic solvent, preferably the organic solvent is selected from alcohols including glycols, esters, ethers including polymeric ethers and mixtures thereof, more preferably the organic solvent is selected from monohydric alcohols, glycols and mixtures thereof, and most preferably the organic solvent is ethanol.

In another embodiment, the ink composition has a pH in the range of:
(i) from 0.01 to 2.5, preferably from 0.1 to 2, and most preferably from 0.5 to 1.5; or
(ii) from 10 to 14, preferably from 11 to 13.5, and most preferably from 12 to 13.

In still another embodiment, the acid contained in the ink composition is selected from H₃PO₄, H₂SO₄, HCl and mixtures thereof, preferably the acid is H₃PO₄.

In still another embodiment, the base contained in the ink composition is selected from MOH, MNH₂, NH₃ and mixtures thereof, and preferably the base is MOH, and wherein M represents a metal selected from Li, Na, K and mixtures thereof, preferably M is Na.

In another embodiment:
(i) the acid has a pKₐ of 3.5 or less, preferably 2.5 or less, more preferably 1 or less, and most preferably 0 or less; and/or
(ii) the base has a pK_{b} of 5 or less, preferably 2 or less, more preferably 1 or less, and most preferably 0.5 or less.

In another embodiment according to the present invention, the second ink vehicle is present at a concentration of from 1 to 65 wt%, preferably 2 to 50 wt%, and most preferably 5 to 40 wt%, based on the total weight of the ink composition.

In still another embodiment according to the present invention, the etchant is present at a concentration of from 0.1 to 85 wt%, preferably from 0.5 to 70 wt%, more preferably from 1 to 65 wt%, and most preferably from 5 to 55 wt%, based on the total weight of the ink composition.

In another embodiment, the inventive process is further characterized in that:
(i) the droplets of the ink composition deposited in step (c) have a drop size in the range of from 0.1 to 50 pl, preferably from 1 to 35 pl, and most preferably from 5 to 15 pl; and/or
(ii) the droplets of the ink composition deposited in step (c) are deposited at a drop spacing in the range of from 1 to 1000 µm, preferably from 5 to 500 µm, and most preferably from 10 to 150 µm.

In another embodiment according to the present invention, the substrate is a non-layered solid metal substrate, preferably a metal foil or a metal plate, most preferably the substrate is a metal foil.

In still another embodiment, the pattern is a bar code, a two-dimensional bar code, a QR code, a security mark, a label, a number, a letter, an alphanumeric symbol, a logo, an image, a braille marking or any combination thereof.

In still another embodiment, the printing method is selected from inkjet printing, electronic syringe dispensing, offset printing, flexographic printing, screen printing, plotting, contact stamping, rotogravure printing, pad printing, and preferably the printing method is inkjet printing.

In still another embodiment according to the present invention, the (either acidic or alkaline) ink composition further comprises a pigment, a colorant, a fluorescent dye, a phosphorescent dye, an ultraviolet absorbing dye, a near infrared absorbing dye, a thermochromic dye, a halochromic dye, metal salts, magnetic particles or a mixture thereof.

In still another embodiment, the inventive process is characterized in that in step (d) the ink composition is allowed to react with the printable metal surface:
(i) for at least 0.01 seconds, preferably at least 0.1 seconds, more preferably at least 0.5 seconds and most preferably at least 2 seconds; and/or
(ii) for 60 seconds or less, preferably 30 seconds or less, and most preferably 10 seconds or less.

In another embodiment, the inventive process is characterized in that the process further comprises a step (e) of heating the substrate and/or the surrounding atmosphere before and/or during and/or after step (c) and/or before and/or during and/or after step (d).

In still another embodiment, the substrate obtainable by the inventive process is characterized in that the etched pattern differs from the metal surface in surface roughness, gloss, light absorption, electromagnetic radiation reflection, fluorescence, phosphorescence, magnetic property, electric conductivity, thermal conductivity, whiteness and/or brightness.

### (A) Substrate

In step (a) of the process according to the present invention, a substrate having a printable metal surface is provided.

In principle, the substrate can be any substrate having a printable metal surface, which includes both, solid metal substrates, such as metal plates and metal foils, and layered composite materials comprising a base substrate and a metal surface layer.

Accordingly, in one embodiment, the substrate can be selected from solid metal substrates and composite substrates comprising a base substrate and a printable metal surface.

In a preferred embodiment, the substrate is a solid metal substrate. In turn, solid metal substrates can be layered metal substrates comprising two or more metal layers of which at least one comprises the printable metal surface or they can be non-layered substrates. In cases where the substrate is a layered solid metal substrate, the individual layers can consist of different metals or the layers can consist of the same metal.

In a particularly preferred embodiment, the substrate is a non-layered solid metal substrate, more preferably a metal foil or a metal plate, and most preferably a metal foil. In some embodiments of the present invention, the metal foil can have a thickness in the range of from 1 to 500 µm, preferably from 5 to 100 µm, and most preferably from 10 to 50 µm or from 8 to 25 µm.

Independently from the structure of the substrate, the metal of the printable metal surface can vary. In one embodiment according to the present invention, the metal is selected from Al, Ag, Cr, Cu, Fe, Ni, Sn, Ti, V, Zn and alloys of these metals. As used herein, the term "alloy" refers to any alloy that comprises at least one of the indicated metals and thus includes alloys comprising other metals such as steel alloys. Al and Cu are preferred metals.

In some particularly preferred embodiments, the substrate is a non-layered solid metal substrate, more preferably a metal foil or a metal plate, and most preferably a metal foil, wherein the metal is selected from Al, Ag, Cr, Cu, Fe, Ni, Sn, Ti, V, Zn and alloys of these metals, preferably the metal is Al or Cu.

The skilled person will appreciate that some metals are subject to passivation, especially when exposed to air. The terms "metal surface" and "printable metal surface" as used herein thus shall cover both, bare metal surfaces and passivated metal surfaces. However, in some preferred embodiments, the metal surface is a bare metal surface.

### (B) Ink composition

The ink composition used in the inventive process comprises a first ink vehicle being water, a second ink vehicle being an organic compound and an etchant being an acid or a base according to the Brønsted definition.

The first ink vehicle is water. In principle, the ink composition can be prepared with any conceivable type of water. The water thus can be distilled water, deionized water or tap water. Preferably, the water is distilled water or deionized water.

The second ink vehicle is an organic compound. For example, the organic compound can be used to adapt the surface tension of the ink composition and to improve compatibility with the print head. Non-limiting examples of organic compounds include dispersants, surfactants, rheology modifiers, lubricants, defoamers, preservatives, charge modifiers, binders, hydrophobizing agents, retention aids and the like.

In one embodiment according to the present invention, the organic compound is selected from surfactants, organic solvents and mixtures thereof. Suitable surfactants include monomeric or polymeric non-ionic surfactants (e.g. sulfate, sulfonate, and phosphate esters or carboxylates), cationic surfactants (e.g. protonated amines) and anionic surfactants (e.g. ethoxylated alcohols). Suitable organic solvents include alcohols including glycols, esters, ethers including polymeric ethers and mixtures thereof. Preferably, the organic solvent is selected from monohydric alcohols such as methanol, ethanol, 1-propanol or 2-propanol, glycols and mixtures thereof, and most preferably the organic solvent is ethanol.

Said second ink vehicle, i.e. the organic compound or e.g. any of the organic solvents specified above, can be present at a concentration of from 1 to 65 wt%, preferably 2 to 50 wt%, and most preferably 5 to 40 wt%, based on the total weight of the ink composition.

Furthermore, the ink composition of the present invention comprises an etchant which is either an acid according to the Brønsted definition or a base according to the Brønsted definition. The skilled person will appreciate that the ink composition can comprise more than one etchant, e.g. a mixture of two or more acids according to the Brønsted definition or a mixture of two or more bases according to the Brønsted definition. It is noted that acids according to the Brønsted definition include acidic salts, such as hydrogen sulfates (HSO₄⁻).

The acid can be characterized by a specific dissociation constant (pKₐ), wherein low dissociation constants (i.e. strong acids) can be preferred. According to one embodiment, the acid has a pKₐ of 3.5 or less, preferably 2.5 or less, more preferably 1 or less, and most preferably 0 or less.

In still another embodiment, the acid can be defined by its chemical structure, wherein the acid is selected from selected from H₃PO₄, H₂SO₄, HCl and mixtures thereof, preferably the acid is H₃PO₄.

In a similar manner, the base can be characterized by a specific base constant (pK_{b}), wherein low constants (i.e. strong bases) can be preferred. According to one embodiment, the base has a pK_{b} of 5 or less, preferably 2 or less, more preferably 1 or less, and most preferably 0.5 or less.

In stiller another embodiment, the base can be defined by its chemical structure, wherein the base is selected from MOH, MNH₂, NH₃ and mixtures thereof, and preferably the base is MOH, and wherein M represents a metal selected from Li, Na, K and mixtures thereof, preferably M is Na. Accordingly, a particularly preferred base in NaOH.

The ink composition has a specific pH which can be in a range of from 0 to 4 in case the etchant is an acid or from 9 to 14 in case the etchant is a base. In some embodiments, the pH of the ink composition can be used to adapt the ink reactivity and the etching depth. In some preferred embodiments, the ink composition therefore has a pH in the range of (i) from 0.01 to 2.5, preferably from 0.1 to 2, and most preferably from 0.5 to 1.5 in case the etchant is an acid or (ii) from 10 to 14, preferably from 11 to 13.5, and most preferably from 12 to 13 in case the etchant is a base.

In some embodiments, the ink reactivity and the etching depth can also depend from the concentration of the etchant in the ink composition. Therefore, the etchant, including any of the etchants specified above, can be present at a concentration of from 0.1 to 85 wt%, preferably from 0.5 to 70 wt%, more preferably from 1 to 65 wt%, and most preferably from 5 to 55 wt%, based on the total weight of the ink composition.

The ink reactivity can be further enhanced and the reaction rate can be further accelerated by electrostatic assist, corona or plasma, using the corresponding devices known to the skilled person.

In one exemplary embodiment, the ink composition thus comprises a first ink vehicle being water, preferably distilled or deionized water, a second ink vehicle being an organic compound, preferably an organic solvent, and an etchant being an acid or a base according to the Brønsted definition, wherein the ink composition has a pH in the range of from 0 to 4 in case the etchant is an acid or from 9 to 14 in case the etchant is a base.

In a particularly preferred embodiment, the ink composition of the present invention comprises
(i) a first ink vehicle being water, preferably distilled or deionized water;
(ii) a second ink vehicle being an organic compound selected from surfactants, organic solvents and mixtures thereof, preferably an organic solvent selected from alcohols including glycols, esters, ethers including polymeric ethers and mixtures thereof, more preferably an organic solvent selected from monohydric alcohols such as methanol, ethanol, 1-propanol or 2-propanol, glycols and mixtures thereof, and most preferably the organic solvent is ethanol; and
(iii) an etchant being an acid according to the Brønsted definition, wherein the acid is selected from H₃PO₄, H₂SO₄, HCl and mixtures thereof, preferably the acid is H₃PO₄; and
wherein the ink composition has a pH in the range of from 0 to 4, preferably from 0.01 to 2.5, more preferably from 0.1 to 2, and most preferably from 0.5 to 1.5.

In another particularly preferred embodiment, the ink composition of the present invention comprises
( i) a first ink vehicle being water, preferably distilled or deionized water;
( ii) a second ink vehicle being an organic compound selected from surfactants, organic solvents and mixtures thereof, preferably an organic solvent selected from alcohols including glycols, esters, ethers including polymeric ethers and mixtures thereof, more preferably an organic solvent selected from monohydric alcohols such as methanol, ethanol, 1-propanol or 2-propanol, glycols and mixtures thereof, and most preferably the organic solvent is ethanol; and
( iii) an etchant being a base according to the Brønsted definition, wherein the base is selected from MOH, MNH₂, NH₃ and mixtures thereof, preferably the base is MOH, and wherein M represents a metal selected from Li, Na, K and mixtures thereof, preferably M is Na; and
wherein the ink composition has a pH in the range of from 9 to 14, preferably from 10 to 14, more preferably from 11 to 13.5, and most preferably from 12 to 13.

In any of these particularly preferred embodiments, the etchant can be present at a concentration of from 0.1 to 85 wt%, preferably from 0.5 to 70 wt%, more preferably from 1 to 65 wt%, and most preferably from 5 to 55 wt%, based on the total weight of the ink composition.

### (C) Printing step

According to step (c) of the process according to the present invention, droplets of the ink composition are deposited on the printable metal surface of the substrate by a printing method, wherein the ink composition is deposited onto the printable metal surface in the form of a pattern.

In this regard, the pattern can have any conceivable form or shape that can be applied by any printing method or with any printing device. In a typical embodiment, the pattern is a preselected pattern. Depending on the intended use, the pattern can be, for example, in the form a bar code, a two-dimensional bar code, a QR code, a security mark, a label, a number, a letter, an alphanumeric symbol, a logo, an image, a braille marking or any combination thereof

In one embodiment according to the present invention, the printing method is digital printing method, preferably digital inkjet printing. Other suitable printing devices and methods include, without being limited to, electronic syringe dispensing, offset printing, flexographic printing, screen printing, plotting, contact stamping, rotogravure printing, pad printing, preferably the printing method is inkjet printing. Therefore, in another embodiment, the printing method is selected from inkjet printing, electronic syringe dispensing, offset printing, flexographic printing, screen printing, plotting, contact stamping, rotogravure printing, pad printing, preferably the printing method is inkjet printing.

According to the present invention, the ink composition is deposited onto the printable metal surface in the form of a pattern which defines the printed area on the metal surface. This means that in contrast to conventional etching processes, where a protective layer is first applied on the surface and the etchant is then applied to the entire surface, the process of the present invention does not require masking and the etchant is applied only to the area which defines the pattern.

The ink composition can be applied at varying drop spacing and varying drop size (i.e. drop volume). In particular the drop volume can be used to control the etching depth alone or in concert with, for example, the pH of the ink composition or the etchant concentration.

In one embodiment, the droplets of the ink composition deposited in step (c) can have a drop size in the range of from 0.1 to 50 pl, preferably from 1 to 35 pl, and most preferably from 5 to 15 pl.

Additionally or alternatively, the droplets of the ink composition deposited in step (c) can be deposited at a drop spacing in the range of from 1 to 1000 µm, preferably from 5 to 500 µm, and most preferably from 10 to 150 µm.

In a preferred embodiment, the printing method is inkjet printing, wherein the drop size is in the range of from 0.1 to 50 pl, preferably from 1 to 35 pl, and most preferably from 5 to 15 pl, and wherein the drop spacing is in the range of from 1 to 1000 µm, preferably from 5 to 500 µm, and most preferably from 10 to 150 µm.

In a particularly preferred embodiment of the inventive process, the ink composition comprises
(i) a first ink vehicle being water, preferably distilled or deionized water;
(ii) a second ink vehicle being an organic compound selected from surfactants, organic solvents and mixtures thereof, preferably an organic solvent selected from alcohols including glycols, esters, ethers including polymeric ethers and mixtures thereof, more preferably an organic solvent selected from monohydric alcohols such as methanol, ethanol, 1-propanol or 2-propanol, glycols and mixtures thereof, and most preferably the organic solvent is ethanol; and
(iii) an etchant being an acid according to the Brønsted definition, wherein the acid is selected from H₃PO₄, H₂SO₄, HCl and mixtures thereof, preferably the acid is H₃PO₄; and
wherein the ink composition has a pH in the range of from 0 to 4, preferably from 0.01 to 2.5, more preferably from 0.1 to 2, and most preferably from 0.5 to 1.5;
wherein the printing method is inkjet printing;
wherein the drop size is in the range of from 0.1 to 50 pl, preferably from 1 to 35 pl, and most preferably from 5 to 15 pl; and
wherein the drop spacing is in the range of from 1 to 1000 µm, preferably from 5 to 500 µm, and most preferably from 10 to 150 µm.

In another particularly preferred embodiment of the inventive process, the ink composition comprises
( i) a first ink vehicle being water, preferably distilled or deionized water;
( ii) a second ink vehicle being an organic compound selected from surfactants, organic solvents and mixtures thereof, preferably an organic solvent selected from alcohols including glycols, esters, ethers including polymeric ethers and mixtures thereof, more preferably an organic solvent selected from monohydric alcohols such as methanol, ethanol, 1-propanol or 2-propanol, glycols and mixtures thereof, and most preferably the organic solvent is ethanol; and
( iii) an etchant being a base according to the Brønsted definition, wherein the base is selected from MOH, MNH₂, NH₃ and mixtures thereof, preferably the base is MOH, and wherein M represents a metal selected from Li, Na, K and mixtures thereof, preferably M is Na; and
wherein the ink composition has a pH in the range of from 9 to 14, preferably from 10 to 14, more preferably from 11 to 13.5, and most preferably from 12 to 13;
wherein the printing method is inkjet printing;
wherein the drop size is in the range of from 0.1 to 50 pl, preferably from 1 to 35 pl, and most preferably from 5 to 15 pl; and
wherein the drop spacing is in the range of from 1 to 1000 µm, preferably from 5 to 500 µm, and most preferably from 10 to 150 µm.

In any of these particularly preferred embodiments, the etchant can be present at a concentration of from 0.1 to 85 wt%, preferably from 0.5 to 70 wt%, more preferably from 1 to 65 wt%, and most preferably from 5 to 55 wt%, based on the total weight of the ink composition.

Depositing the ink composition onto the metal surface can be carried out at a specific surface temperature of the substrate and/or at a specific temperature of the surrounding atmosphere, which can be at ambient temperature, for example at a temperature of from 10 to 40 °C, preferably 15 to 35 °C, and most preferably from 18 to 30 °C.

According to the method of the present invention, the ink composition is deposited onto the metal surface in form of a pattern. The pattern may be a continuous layer, a pattern, a pattern of repetitive elements and/or a repetitive combination of elements. Therefore, in another embodiment, the ink composition is deposited in form of a pattern of repetitive elements or repetitive combination(s) of elements, preferably selected from the group consisting of circles, dots, triangles, rectangles, squares, or lines.

### (D) Pattern etching

According to step (d) of the process according to the present invention, the deposited ink composition is allowed to react with the printable metal surface to obtain a metal surface comprising an etched pattern.

In a typical process of the present invention, the etching reaction between the ink composition and the printable metal surface starts immediately and spontaneously upon contacting the ink composition and the metal. The skilled person will recognize that step (c) and step (d) can overlap in time, depending on the time required for depositing the ink composition and the onset time of the etching reaction.

On the one hand, it can be desirable that the reaction time in step (d) is short in order to limit or reduce the etching depth and increasing the efficiency of the process, respectively. On the other hand, a specific minimum reaction can be required in order to achieve a sufficient etching depth. In one embodiment of the inventive process, the ink composition thus is allowed to react with the printable metal surface is step (d) for at least 0.01 seconds, preferably at least 0.1 seconds, more preferably at least 0.5 seconds and most preferably at least 2 seconds. Additionally or alternatively, the ink composition is allowed to react with the printable metal surface is step (d) for 60 seconds or less, preferably 30 seconds or less, and most preferably 10 seconds or less. In a particularly preferred embodiment, the ink composition is allowed to react with the printable metal surface for a period of from 0.01 seconds to 30 seconds, more preferably from 0.1 s to 10 seconds.

As defined above, the etching reaction of the present invention is an erosive chemical process, wherein substrate material, i.e. metal from the printable metal surface, is removed in the form of depressions having a defined pattern. In a typical reaction, elementary metal is dissolved upon reaction with the etchant and converted into a corresponding metal salt, e.g. a metal phosphate in case the acid is H₃PO₄. In the process according to the present invention, the metal is reacted only partially so that the substrate comprises unreacted metal in vertical direction to the printable metal surface directly below the etched pattern.

The etched pattern thus differs from the remaining substrate in that the thickness of the metal surface layer is reduced in vertical direction compared to the unreacted metal surface. Furthermore, the etched pattern can differ from the metal surface in surface roughness, gloss, light absorption, electromagnetic radiation reflection, fluorescence, phosphorescence, magnetic property, electric conductivity, thermal conductivity, whiteness and/or brightness.

The inventors have also found that the process of the present invention allows for the processing of layered substrates with a thin metal surface layer or the processing of thin metal substrates, e.g. thin metal plates or foils. Accordingly, there is no need for the use of layered substrates with an inert barrier layer below the metal surface that is resistant towards the etchant.

Furthermore, the etching process or the etching reaction is not limited to specific combinations of etchants and metals. For example, the metal of the metal surface can be aluminium while the etchant can be selected from both, acids and bases according to the Brønsted definition. Similarly, the metal of the metal surface can be copper while the etchant can be selected from both, acids and bases. In a preferred combination, the metal is Al or Cu and the etchant is H₃PO₄ or NaOH.

In a first particularly preferred embodiment of the inventive process, the ink composition thus can comprise
(i) a first ink vehicle being water preferably distilled or deionized water;
(ii) a second ink vehicle being an organic compound selected from surfactants, organic solvents and mixtures thereof, preferably an organic solvent selected from alcohols including glycols, esters, ethers including polymeric ethers and mixtures thereof, more preferably an organic solvent selected from monohydric alcohols such as methanol, ethanol, 1-propanol or 2-propanol, glycols and mixtures thereof, and most preferably the organic solvent is ethanol; and
(iii) an etchant being an acid according to the Brønsted definition, wherein the acid is selected from H₃PO₄, H₂SO₄, HCl and mixtures thereof, preferably the acid is H₃PO₄; and
wherein the ink composition has a pH in the range of from 0 to 4, preferably from 0.01 to 2.5, more preferably from 0.1 to 2, and most preferably from 0.5 to 1.5; and
wherein the metal is selected from Al, Ag, Cr, Cu, Fe, Ni, Sn, Ti, V, Zn and alloys of these metals, preferably the metal is Al or Cu.

In a second particularly preferred embodiment of the inventive process, the ink composition thus can comprise
( i) a first ink vehicle being water, preferably distilled or deionized water;
( ii) a second ink vehicle being an organic compound selected from surfactants, organic solvents and mixtures thereof, preferably an organic solvent selected from alcohols including glycols, esters, ethers including polymeric ethers and mixtures thereof, more preferably an organic solvent selected from monohydric alcohols such as methanol, ethanol, 1-propanol or 2-propanol, glycols and mixtures thereof, and most preferably the organic solvent is ethanol; and
( iii) an etchant being a base according to the Brønsted definition, wherein the base is selected from MOH, MNH₂, NH₃ and mixtures thereof, preferably the base is MOH, and wherein M represents a metal selected from Li, Na, K and mixtures thereof, preferably M is Na; and
wherein the ink composition has a pH in the range of from 9 to 14, preferably from 10 to 14, more preferably from 11 to 13.5, and most preferably from 12 to 13; and
wherein the metal is selected from Al, Ag, Cr, Cu, Fe, Ni, Sn, Ti, V, Zn and alloys of these metals, preferably the metal is Al or Cu.

In any of these particularly preferred embodiments, the etchant can be present at a concentration of from 0.1 to 85 wt%, preferably from 0.5 to 70 wt%, more preferably from 1 to 65 wt%, and most preferably from 5 to 55 wt%, based on the total weight of the ink composition.

In addition, the substrate in any of these particularly preferred embodiments can be a non-layered solid metal substrate, more preferably a metal foil or a metal plate, and most preferably a metal foil, wherein the metal is selected from Al, Ag, Cr, Cu, Fe, Ni, Sn, Ti, V, Zn and alloys of these metals, preferably the metal is Al or Cu. In a preferred combination, the metal is Al or Cu and the etchant is H₃PO₄ or NaOH.

The ink composition and the metal surface can be allowed to react at ambient temperature, for example at a temperature of from 10 to 40 °C, preferably 15 to 35 °C, and most preferably from 18 to 30 °C.

### (E) Optional ink components and process steps

Apart from the first ink vehicle (water), the second ink vehicle (organic compound) and the etchant (acid or base according to the Brønsted definition), the ink composition useful for the process according to the present invention can comprise further components.

In one embodiment, the (either acidic or alkaline) ink composition further comprises one or more of a pigment, a colorant, a fluorescent dye, a phosphorescent dye, an ultraviolet absorbing dye, a near infrared absorbing dye, a thermochromic dye, a halochromic dye, metal salts, magnetic particles. In case the ink composition further comprises one or more pigments and/or metal salts, the ink composition preferably has an acidic pH. In the meaning of the present invention, an "acidic ink composition" has a pH the range of from 0 to 4, preferably from 0.01 to 2.5, more preferably from 0.1 to 2, and most preferably from 0.5 to 1.5. By contrast, an "alkaline ink composition" has a pH in the range of from 9 to 14, preferably from 10 to 14, more preferably from 11 to 13.5, and most preferably from 12 to 13.

However, in some cases it may be preferred that the ink composition of the present invention does not contain any further components. Therefore, in one embodiment, the ink composition consists of a first ink vehicle being water, a second ink vehicle being an organic compound, and an etchant being an acid or a base according to the Brønsted definition as described hereinabove.

In order to increase the reaction rate of the etching reaction and to reduce the overall production time, it is possible to heat the substrate including the metal surface and/or the surrounding atmosphere in an optional heating step (e). At the same time, the heating step (e) can serve as a drying step to remove or evaporate residual ink vehicles. In principle, said heating step (e) can be carried out at any time before and/or during and/or after step (c) and/or step (d). In a preferred embodiment, heating step (e) is carried out before and/or during and/or after (d), more preferably after step (d). For this purpose, the substrate comprising the metal surface can be heated directly, for example by applying an electric current to the metal surface, or the surrounding atmosphere can be heated, for example by means of a fan heater.

The heating step can be carried out in order to heat the substrate and/or the surrounding atmosphere to a specific temperature, for example to a temperature of from 25 to 300 °C, preferably 30 to 200 °C, and most preferably from 50 to 150 °C.

The process according to the present invention can further comprise an optional washing step, wherein the metal surface of the substrate is washed to remove residual etchant of the ink composition or reaction products resulting from the reaction between the etchant and the metal of the metal surface.

In one embodiment, the inventive process thus comprises a step of washing the metal surface with water
(i) after step (d); or
(ii) in case the process further comprises optional heating step (e), between step (d) and step (e) and/or after heating step (e).

By means of the optional washing step, it is also possible to adjust the reaction time in order to limit, reduce or otherwise control the etching depth.

According to another embodiment of the invention, the process further comprises a step of applying a protective layer above etched pattern.

The protective layer can be made from any material, which is suitable to protect the underlying pattern against environmental impacts or mechanical wear. Examples of suitable materials are resins, varnishes, silicones, polymers, or cellulose-based materials. However, it may be preferred that the protective layer allows for a detection within the visual and/or infrared range.

The protective layer may be applied by any method known in the art and suitable for the material of the protective layer. Suitable methods are, for example, air knife coating, electrostatic coating, metering size press, film coating, spray coating, extrusion coating, wound wire rod coating, slot coating, slide hopper coating, gravure, curtain coating, high speed coating, lamination, printing, adhesive bonding, and the like.

According to one embodiment of the present invention, the protective layer is applied above the etched pattern and the surrounding substrate surface.

According to another embodiment of the present invention, the protective layer is a removable protective layer.

### (F) Further aspects

According to a further aspect of the present invention, a process for making an etched pattern is provided, the process comprising the following steps:
(a) providing a substrate having a printable metal surface;
(b) providing an ink composition comprising
   (i) a first ink vehicle being water;
   (ii) a second ink vehicle being an organic compound; and
   (iii) an etchant being an acid or a base according to the Brønsted definition;
(c) depositing onto the printable metal surface of the substrate provided in step (a) droplets of the ink composition provided in step (b) by a printing method; and
(d) allowing the deposited ink composition to react with the printable metal surface to obtain a metal surface comprising an etched pattern;
characterized in that the ink composition has a pH in the range of from 0 to 4 or from 9 to 14;
wherein in step (c) the ink composition is deposited onto the printable metal surface in the form of a pattern.

Where appropriate, all details, embodiments and combinations of features disclosed hereinabove apply analogously. In particular, this applies to the features and embodiments in relation to the substrate, the ink composition, the printing step and the pattern etching step.

The present invention further relates to a substrate having a metal surface comprising an etched pattern obtainable by the inventive process.

Where appropriate, the details and embodiments disclosed hereinabove with respect to the inventive process apply analogously to the substrate having a metal surface comprising an etched pattern obtainable by the inventive process. In particular, this applies to the properties of the substrate.

Accordingly, the substrate obtainable by the inventive process has a metal surface comprising an etched pattern, wherein the substrate comprises unreacted metal in vertical direction to the printable metal surface directly below the etched pattern. The etched pattern thus differs from the remaining substrate in that the thickness of the metal surface layer is reduced in vertical direction compared to the unreacted metal surface.

In one embodiment of the substrate obtainable by the inventive process, the metal of the metal surface is selected from Al, Ag, Cr, Cu, Fe, Ni, Sn, Ti, V, Zn and alloys of these metals, preferably the metal is Al or Cu. In a preferred embodiment, the substrate is a non-layered solid metal substrate, more preferably a metal foil or a metal plate, and most preferably a metal foil, wherein the metal is selected from Al, Ag, Cr, Cu, Fe, Ni, Sn, Ti, V, Zn and alloys of these metals, preferably the metal is Al or Cu.

In one embodiment of the substrate obtainable by the inventive process, the etched pattern further differs from the metal surface in surface roughness, gloss, light absorption, electromagnetic radiation reflection, fluorescence, phosphorescence, magnetic property, electric conductivity, thermal conductivity, whiteness and/or brightness. The etched pattern shows an increased resistance towards manipulation, environmental impacts or mechanical wear compared to other conventional patterning technologies.

The pattern can comprise or consist of repetitive elements, preferably selected from the group consisting of circles, dots, triangles, rectangles, squares, or lines. The distance between the centres of two directly adjacent etched elements ("element spacing") can vary depending on the drop spacing of the printing method. Therefore, in one embodiment of the substrate obtainable by the inventive process, the pattern comprises a plurality of repetitive elements, preferably selected from the group consisting of circles, dots, triangles, rectangles, squares, or lines, wherein the element spacing preferably is in a range of from 1 to 1000 µm, preferably from 5 to 500 µm, and most preferably from 10 to 150 µm.

As explained hereinabove, the substrate obtainable by the inventive process comprises unreacted metal in vertical direction to the printable metal surface directly below the etched pattern so that the metal surface is not removed or destroyed completely in vertical direction. In turn, this allows for the processing of layered substrates with a thin metal surface layer or the processing of thin metal substrates, e.g. thin metal plates or foils, without the formation of unwanted holey or brittle areas.

This makes the process of the present invention particularly useful for marking or decorating thin metal plates and foils which are used in many packaging applications, including etched metal wrapping foils or etched metal lidding seals for blister packs featuring etched brand logos, braille letters or security marks and the like.

Therefore, in some further embodiments where the substrate is a metal foil, said metal foil can have a thickness in the range of from 1 to 500 µm, preferably from 5 to 100 µm, and most preferably from 10 to 50 µm or from 8 to 25 µm.

Another aspect of the present invention relates to the use of such substrates obtainable by the inventive process in various applications. For example, it can be directly used in tactile applications, in braille applications, in printing applications, in analytical applications, in diagnostic applications, in bioassays, in chemical applications, in electrical applications, in security devices, in overt or covert security elements, in brand protection, in micro lettering, in micro imaging, in decorative, artistic, or visual applications, or in packaging applications.

The substrate obtainable by the inventive process can also be used in combination with other materials or parts, for example as a component of composed articles. Another aspect of the present invention thus relates to an article comprising the substrate obtainable by the inventive process, preferably the article is a print medium, a packaging, a data storage, a security document, a non-secure document, a decorative substrate, a drug, a tobacco product, a bottle, a garment, a container, a sporting good, a toy, a game, a mobile phone, a compact disc, a digital video disc, a blue ray disk, a machine, a tool, a vehicle part such as a car part, a sticker, a label, a tag, a poster, a passport, a driving licence, a bank card, a credit card, a bond, a ticket, a postage stamp, a tax stamp, a banknote, a certificate, a brand authentication tag, a business card, a greeting card, a braille document, a tactile document, or a wall paper.

Finally, the inventive process can be part of a process for the production of formed articles. Depending on the shape of the substrate, the etched substrate which is directly obtainable by the inventive process, can also be an etched article having a metal surface comprising an etched pattern. Therefore, still another aspect of the present invention relates to the use of the inventive process for the production of metal foils, metal bottles, metal cans, metal containers, metal packaging materials, metal device covers such as metal mobile phone covers, metal toys, metal tools, metal decorative articles, metal art, metal vehicle parts, metal construction parts, metal labels or metal stickers.

In any of the foregoing additional aspects, the pattern can comprise or consist of repetitive elements, preferably selected from the group consisting of circles, dots, triangles, rectangles, squares, or lines. As mentioned above, the element spacing can vary depending on the drop spacing of the printing method. Therefore, in further embodiments, the pattern comprises a plurality of repetitive elements, preferably selected from the group consisting of circles, dots, triangles, rectangles, squares, or lines, wherein the element spacing preferably is in a range of from 1 to 1000 µm, preferably from 5 to 500 µm, and most preferably from 10 to 150 µm.

### EXAMPLES

The scope and interest of the invention may be better understood on basis of the following examples which are intended to illustrate embodiments of the present invention.

### (A) Analytical methods

All parameters defined throughout the present document and those mentioned in the following examples are based on the following measuring methods:

### pH values

Any pH value is measured at 25 °C using a Mettler-Toledo Seven Easy pH meter and a Mettler-Toledo InLab Expert Pro pH electrode. A three point calibration (according to the segment method) of the instrument is first made using commercially available buffer solutions having pH values of 4, 7 and 10 at 25 °C (from Aldrich). The reported pH values are the endpoint values detected by the instrument (signal differs by less than 0.1 mV from the average over the last 6 seconds).

### pKₐ and pK_{b} values

Any pKₐ or pK_{b} value specified herein refers to the values listed in textbooks, preferably Harris, D. C. "Quantitative Chemical Analysis: 3rd Edition", 1991, W.H. Freeman & Co. (USA), ISBN 0-7167-2170-8. The skilled person will know that pKₐ and pK_{b} values can be converted into each other.

### Scanning electron microscope micrographs (SEM)

The prepared samples were examined by a Sigma VP field emission scanning electron microscope (Carl Zeiss AG, Germany) and a variable pressure secondary electron detector (VPSE) and/or secondary electron detector (SE) with a chamber pressure of about 50 Pa.

### Optical microscope pictures

The prepared samples were examined by a Leica MZ16A stereomicroscope (Leica Microsystems Ltd., Switzerland).

### (B) Examples

The following examples are not to be construed to limit the scope of the claims in any manner whatsoever.

### Materials and methods

### Ink compositions

- L1 :: 50 wt% phosphoric acid, 24 wt% ethanol and 26 wt% water (wt% are based on the total weight of the ink composition)
- L2:: 2 wt% sodium hydroxide, 21 wt% ethanol, 77 wt% water (wt% are based on the total weight of the ink composition)

### Printing method

Preselected patterns, e.g. in form of a logo, were created on metal substrates by applying either ink composition L1 or L2. The ink compositions were deposited onto the substrate by inkjet printing using a Dimatix Materials Printer (DMP) of Fujifilm Dimatix Inc., USA, with a cartridge-based inkjet print head having a drop volume of either 1 pL or 10 pL. The print direction was from left to right, one row (line) at a time. The ink compositions were applied onto the substrates with a drop volume of 10 pL and by using various drop spacings (30, 40, 50, 60, 80, 120 µm).

### Printing trials

### Example 1 - Acidic print on aluminium

A preselected pattern ("Mozaiq") in form of a logo was applied onto the matt side of a kitchen aluminium foil substrate by printing ink composition L1 at a drop volume of 10 pL and a drop spacing of 80 µm.

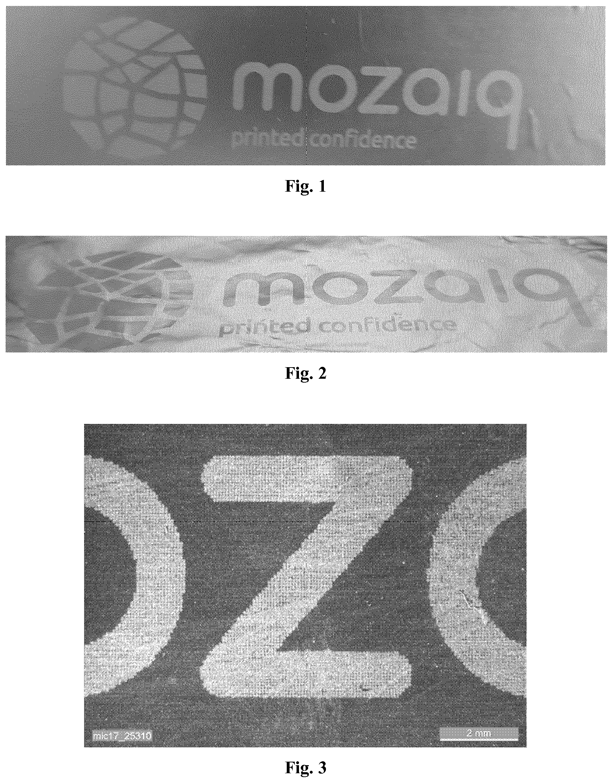

Fig. 1 and Fig. 2: Digital camera images of the printed "Mozaiq" logo were taken at a normal (Fig. 1) and at a grazing angle (Fig. 2), respectively. From the top, the printed area looks brighter/whiter than the matt side of the kitchen aluminium foil substrate while, at a grazing angle, it looks darker than the surrounding substrate. In both cases, the logo can be clearly distinguished from the remaining non-printed area.
Fig. 3 shows an optical microscope image of the Mozaiq logo with separated reaction areas of the individual ink droplets.

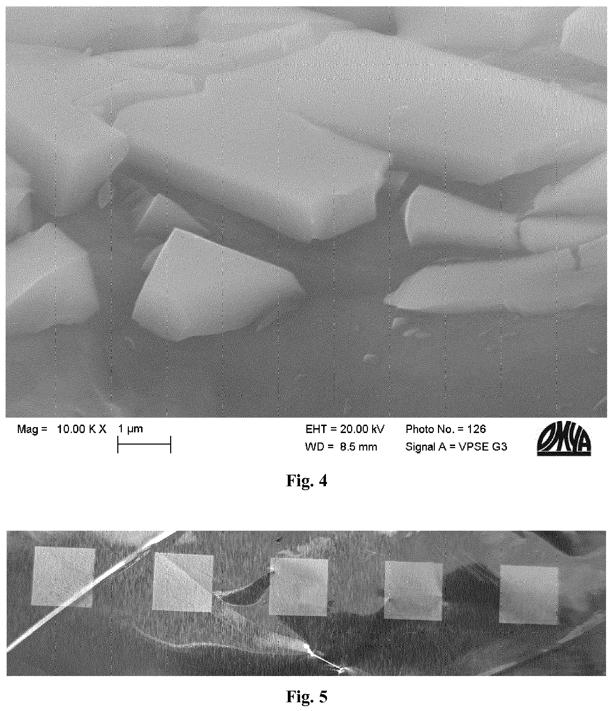

Fig. 4 shows a SEM micrograph of the Mozaiq logo. The visible cracks are formed when cutting the aluminium foil by scissors, which indicates that a layer of aluminium phosphate is formed as a result of the reaction (approx. 0.5 µm thickness).

### Example 2 - Alkaline print on aluminium

A preselected pattern in form of an array of squares was created on the glossy side of a kitchen aluminium foil substrate by printing ink composition L2 at a drop volume of 10 pL and a drop spacing of 30 µm.

Fig. 5 shows a digital camera image of an array of squares taken at a normal viewing angle.

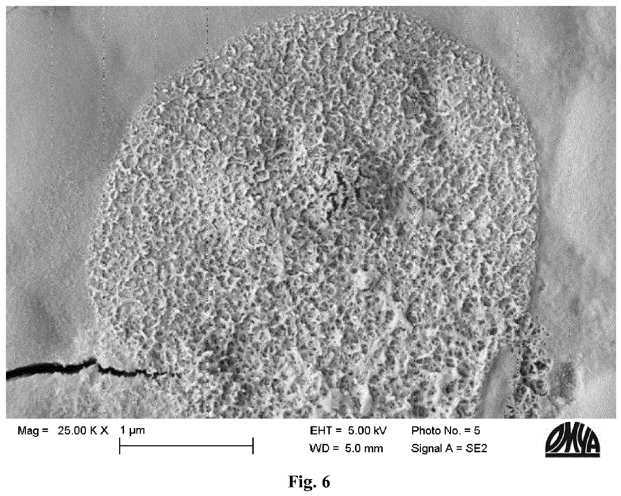

Fig. 6 shows a SEM micrograph of an individual drop formed as a result of a reaction between ink composition L2 and aluminium substrate.

### Example 3 - Acidic print on copper

A preselected pattern in form of a square was created on a copper thin plate substrate. For this purpose, ink composition L1 was applied onto the substrate at a drop volume of 10 pL and a drop spacing of 50 µm.

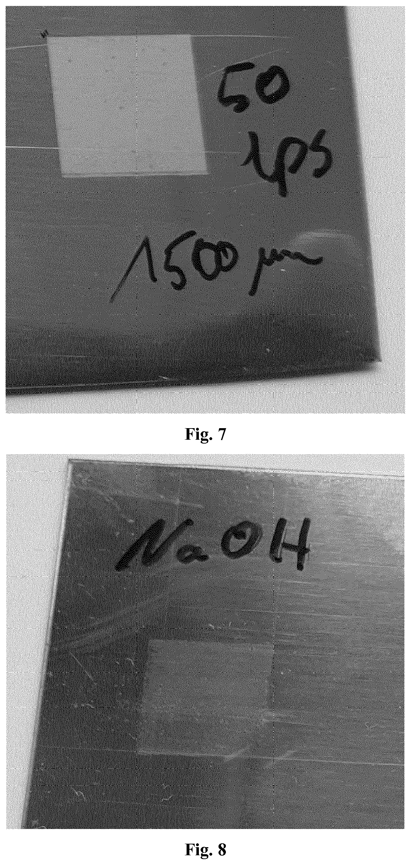

Fig. 7 shows a top view digital camera image of a square printed with ink composition L1 on a copper plate.

### Example 4 - Alkaline print on copper

A preselected pattern in form of a square was created on a copper thin plate substrate. For this purpose, ink composition L2 was applied onto the substrate at a drop volume of 10 pL and a drop spacing of 30 µm.

Fig. 8 shows a top view digital camera image of a square printed with ink composition L2 on a copper plate.

### Further SEM micrographs

SEM micrographs were taken to show that the metal is reacted only partially and that the substrate comprises unreacted metal in vertical direction to the printable metal surface directly below the etched pattern.

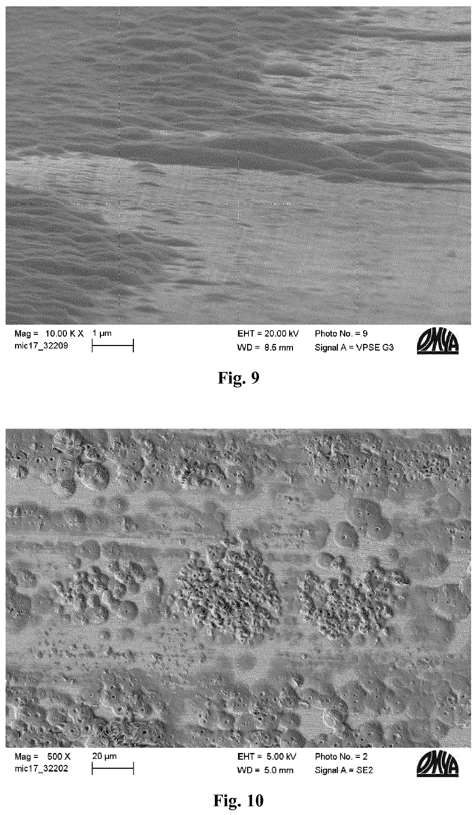

Fig. 9 is a SEM micrograph of the glossy side of kitchen aluminium foil printed with ink composition L2 as described in Example 2.

Fig. 10 is a SEM micrograph of a copper substrate printed with ink composition L1 as described in Example 3.

## Claims

1. A process for making an etched pattern, the process comprising the following steps:
(a) providing a substrate having a printable metal surface;
(b) providing an ink composition comprising
(i) a first ink vehicle being water;
(ii) a second ink vehicle being an organic compound; and
(iii) an etchant being an acid or a base according to the Brønsted definition;
(c) depositing onto the printable metal surface of the substrate provided in step (a) droplets of the ink composition provided in step (b) by a printing method; and
(d) allowing the deposited ink composition to react with the printable metal surface to obtain a metal surface comprising an etched pattern;
**characterized in that** the ink composition has a pH in the range of from 0 to 4 or from 9 to 14, wherein in step (c) the ink composition is deposited onto the printable metal surface in the form of a pattern, and wherein in step (d) the metal is reacted only partially so that the substrate comprises unreacted metal in vertical direction to the printable metal surface directly below the etched pattern.

2. The process according to claim 1, **characterized in that** the metal is selected from Al, Ag, Cr, Cu, Fe, Ni, Sn, Ti, V, Zn and alloys of these metals, preferably the metal is Al or Cu.

3. The process according to any of claims 1 or 2, **characterized in that** the organic compound is an organic solvent, preferably the organic solvent is selected from alcohols including glycols, esters, ethers including polymeric ethers and mixtures thereof, more preferably the organic solvent is selected from monohydric alcohols, glycols and mixtures thereof, and most preferably the organic solvent is ethanol.

4. The process according to any of claims 1 to 3, **characterized in that** the ink composition has a pH in the range of:
(i) from 0.01 to 2.5, preferably from 0.1 to 2, and most preferably from 0.5 to 1.5; or
(ii) from 10 to 14, preferably from 11 to 13.5, and most preferably from 12 to 13.

5. The process according to any of claims 1 to 4, **characterized in that** the acid is selected from H₃PO₄, H₂SO₄, HCl and mixtures thereof, preferably the acid is H₃PO₄.

6. The process according to any of claims 1 to 5, **characterized in that** the base is selected from MOH, MNH₂, NH₃ and mixtures thereof, and preferably the base is MOH, and wherein M represents a metal selected from Li, Na, K and mixtures thereof, preferably M is Na.

7. The process according to any of claims 1 to 6, **characterized in that**:
(i) the acid has a pKₐ of 3.5 or less, preferably 2.5 or less, more preferably 1 or less, and most preferably 0 or less; and/or
(ii) the base has a pK_{b} of 5 or less, preferably 2 or less, more preferably 1 or less, and most preferably 0.5 or less.

8. The process according to any of claims 1 to 7, **characterized in that** the second ink vehicle is present at a concentration of from 1 to 65 wt%, preferably 2 to 50 wt%, and most preferably 5 to 40 wt%, based on the total weight of the ink composition.

9. The process according to any of claims 1 to 8, **characterized in that** the etchant is present at a concentration of from 0.1 to 85 wt%, preferably from 0.5 to 70 wt%, more preferably from 1 to 65 wt%, and most preferably from 5 to 55 wt%, based on the total weight of the ink composition.

10. The process according to any of claims 1 to 9, **characterized in that**:
(i) the droplets of the ink composition deposited in step (c) have a drop size in the range of from 0.1 to 50 pl, preferably from 1 to 35 pl, and most preferably from 5 to 15 pl; and/or
(ii) the droplets of the ink composition deposited in step (c) are deposited at a drop spacing in the range of from 1 to 1000 µm, preferably from 5 to 500 µm, and most preferably from 10 to 150 µm.

11. The process according to any of claims 1 to 10, **characterized in that** the substrate is a non-layered solid metal substrate, preferably a metal foil or a metal plate, and most preferably a metal foil.

12. The process according to any of claims 1 to 11, **characterized in that** the pattern is a bar code, a two-dimensional bar code, a QR code, a security mark, a label, a number, a letter, an alphanumeric symbol, a logo, an image, a braille marking or any combination thereof.

13. The process according to any of claims 1 to 12, **characterized in that** the printing method is selected from inkjet printing, electronic syringe dispensing, offset printing, flexographic printing, screen printing, plotting, contact stamping, rotogravure printing, pad printing, and preferably the printing method is inkjet printing.

14. The process according to any of claims 1 to 13, **characterized in that** the ink composition further comprises a pigment, a colorant, a fluorescent dye, a phosphorescent dye, an ultraviolet absorbing dye, a near infrared absorbing dye, a thermochromic dye, a halochromic dye, metal salts, magnetic particles or a mixture thereof.

15. The process according to any of claims 1 to 14, **characterized in that** in step (d) the ink composition is allowed to react with the printable metal surface:
(i) for at least 0.01 seconds, preferably at least 0.1 seconds, more preferably at least 0.5 seconds and most preferably at least 2 seconds; and/or
(ii) for 60 seconds or less, preferably 30 seconds or less, and most preferably 10 seconds or less.

16. The process according to any of claims 1 to 15, **characterized in that** the process further comprises a step (e) of heating the substrate and/or the surrounding atmosphere before and/or during and/or after step (c) and/or before and/or during and/or after step (d).

17. A substrate having a metal surface comprising an etched pattern obtainable by a process according to any of claims 1 to 16.

18. The substrate according to claim 17, **characterized in that** the etched pattern differs from the metal surface in surface roughness, gloss, light absorption, electromagnetic radiation reflection, fluorescence, phosphorescence, magnetic property, electric conductivity, thermal conductivity, whiteness and/or brightness.

19. Use of a substrate according to any of claims 17 or 18 in tactile applications, in braille applications, in printing applications, in analytical applications, in diagnostic applications, in bioassays, in chemical applications, in electrical applications, in security devices, in overt or covert security elements, in brand protection, in micro lettering, in micro imaging, in decorative, artistic, or visual applications, or in packaging applications.

20. An article comprising a substrate as defined in any of claims 17 or 18, preferably the article is a print medium, a packaging, a data storage, a security document, a non-secure document, a decorative substrate, a drug, a tobacco product, a bottle, a garment, a container, a sporting good, a toy, a game, a mobile phone, a compact disc, a digital video disc, a blue ray disk, a machine, a tool, a vehicle part such as a car part, a sticker, a label, a tag, a poster, a passport, a driving licence, a bank card, a credit card, a bond, a ticket, a postage stamp, a tax stamp, a banknote, a certificate, a brand authentication tag, a business card, a greeting card, a braille document, a tactile document, or a wall paper.

21. Use of a process according to any of claims 1 to 16 for the production of metal foils, metal bottles, metal cans, metal containers, metal packaging materials, metal device covers such as metal mobile phone covers, metal toys, metal tools, metal decorative articles, metal art, metal vehicle parts, metal construction parts, metal labels or metal stickers.
